# EUROPEAN PATENT APPLICATION

(11) **EP 3 348 380 A1**
(43) Date of publication of application: **18.07.2018**
(21) Application number: 18000049.9
(22) Date of filing: 10.11.2015
(51) Int. Cl.: B29C 63/42, B65D 23/08

(54) **LABELS FOR CONTAINERS AND METHODS OF MAKING LABELS**

(30) Priority: 10.11.2014 US 201462077345 P
(62) Divisional of application: 15798615.9
(71) Applicant: Avery Dennison Corporation, Glendale, CA 91203 (US)
(72) Inventor: Jourde, Benoit, Glendale, California 91203 (US); Patil, Yatin, Glendale, California 91203 (US); Pham, Hoang T., Painesville, Ohio 44077 (US); Potter, Craig W., Mentor, Ohio 44060 (US); XUE, Anle, Glendale, California 91203 (US)
(74) Representative: Müller-Boré & Partner Patentanwälte PartG mbB

(57) **Abstract**

The present invention relates to a method of affixing a label to an object having sides and an end, wherein the sides join the end to form a shoulder, wherein the method comprises:
applying a shrink label around the object, wherein the shrink label extends above the shoulder and extends to an end of the object opposite the shoulder,
heating the shrink label at the shoulder at a sufficient temperature and for a sufficient time to shrink the label extending above the shoulder of the object to contact the shoulder end,
wherein said shrink label comprises a film comprising two outer layers and a core layer, wherein the core layer is arranged between the outer layers and the outer layers each comprise from about 10% to about 30% of the total film thickness and the core layer may comprise from about 70% to about 90% of the total film thickness, wherein:
the outer layers comprise a blend of about 65% to about 99% by weight polyethylene and 0% to about 30% by weight ethylene vinyl acetate, and about 1% to about 5% antiblock; and
the core layer comprises about 0% to about 30% by weight polyethylene, about 30% to about 50% by weight polypropylene, about 10% to about 20% by weight ethylene vinyl acetate, about 10% by weight calcium carbonate masterbatch comprising calcium carbonate in a linear low density polyethylene carrier resin, and about 20% titanium dioxide masterbatch comprising titanium dioxide in a linear low density polyethylene carrier resin.

## Description

### CROSS-REFERENCE TO RELATED APPLICATION

The present application claims the benefit of U.S. Provisional Patent Application No. 62/077,345 filed November 10, 2014, which is incorporated herein by reference in its entirety.

### BACKGROUND OF THE INVENTION

Films have numerous uses, including as labels for products and packaging. For example, personal care products, such as lotions, creams, gels, cosmetics, ointments, and pastes, may be packaged in a container, such as a squeezable tube. The present invention includes shrink films, containers having shrink films, and methods for manufacturing and applying such films.

### SUMMARY OF THE INVENTION

In one embodiment, the invention includes a method of affixing a label to a tubular body having a shoulder end, wherein sides of the tubular body join the shoulder end at a shoulder. The method includes applying a shrink label around the circumference of the tubular body so that the shrink label extends above the shoulder of the tube and extends to an end of the tubular body opposite the shoulder. The method also includes heating the shrink label at a sufficient temperature and for a sufficient time to shrink the label to a sufficiently tight fit around the tubular body and such that the label extending above the shoulder of the tube contacts the shoulder end. In addition, the method includes forming a seal near the end of the tubular body opposite the shoulder, and the label extends through the sealed end.

In another embodiment, the present invention includes a method of affixing a label to a tubular body with a cap. The method includes applying a shrink label around the circumference of the tubular body, wherein the shrink label extends to cover at least a portion of sides of the cap. The method also includes heating the shrink label at a sufficient temperature and for a sufficient time to shrink the label to a sufficiently tight fit around the tubular body and at least a portion of the sides of the cap, an also forming a seal near the end of the tubular body opposite the shoulder, wherein the label extends through the sealed end.

In still another embodiment, the present invention includes a container having a tubular body with a seal that forms a sealed bottom end and also having shoulder assembly end, wherein the body joins the shoulder assembly by a shoulder. The container further includes a label affixed with a flush fit around the tubular body, wherein the label extends above the shoulder of the container and is at least partially affixed on the shoulder assembly end, and the label also extends from the tubular body beyond the seal at the sealed bottom end.

The following description illustrates one or more embodiments of the invention and serves to explain the principles and exemplary embodiment of the invention.

### BRIEF DESCRIPTION OF THE DRAWINGS

Fig. 1 is a squeezable tube with a cap;
Fig. 2A is an embodiment of a tube with a label affixed;
Fig. 2B is an embodiment of a squeezable tube having a label formed from the tube of Fig. 2A;
Fig. 3A is an embodiment of a tube with a label affixed;
Fig. 3B is an embodiment of a squeezable tube having a label formed from the tube of Fig. 3A;
Fig. 4A is an embodiment of a tube with a label affixed;
Fig. 4B is an embodiment of a squeezable tube having a label formed from the tube of Fig. 4A;
Fig. 5A is an embodiment of a tube with a cap with a label affixed;
Fig. 5B is an embodiment of a squeezable tube with a cap having a label formed from the tube and cap of Fig. 5A.
Fig. 6A is an embodiment of a can with a label affixed;
Fig. 6B is an embodiment of a can with a label affixed;
Fig. 6C is an embodiment of a can with a label affixed;
Fig. 7A is an embodiment of a spray can with a label affixed;
Fig. 7B is an embodiment of a spray can with a label affixed;
Fig. 7C is an embodiment of a spray can with a cap label affixed wherein the label extends over the spray can and the sides of the cap;
Fig. 7D is an embodiment of a spray can with a cap label affixed wherein the label extends over the spray can and the sides and a portion of the bottom of the cap;
Fig. 8A is an embodiment of a battery with a label affixed around the sides of the battery;
Fig. 8B is an embodiment of a battery with a label affixed around the sides and a portion of the top of the battery;
Fig. 8C is an embodiment of a battery with a label affixed around the sides and a portion of the bottom of the battery;
Fig. 9A is an embodiment of a bottle with a label affixed around the sides and a lower portion of the neck of the bottle; and
Fig. 9B is an embodiment of a bottle with a label affixed around the sides of the bottle, a lower portion of the neck of the bottle, and a portion of the bottom of the bottle.

### DETAILED DESCRIPTION OF EXEMPLARY EMBODIMENTS

Reference will now be made in detail to exemplary embodiments of the present invention, one or more examples of which are illustrated in the accompanying drawings. Each example is provided by way of explanation of the invention and not by limitation of the invention. It will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended items and their equivalents. In addition, the use of reference characters with the same two ending digits as other reference characters to indicate structure in the present specification and drawings, without a specific discussion of such structure, is intended to represent the same or analogous structure in different embodiments.

In some embodiments, the present invention includes labels for objects, objects, such as containers, having a label, and methods for applying labels to objects. Such containers may be of any suitable type, including, without limitation, bottles, cans, tubes, including extruded tubes and laminated tubes, and cylindrical containers. In some embodiments, the container may be a squeezable tube. In other embodiments, by way of example, the container may be a metal container, such as an aerosol can or an aluminum beverage can.

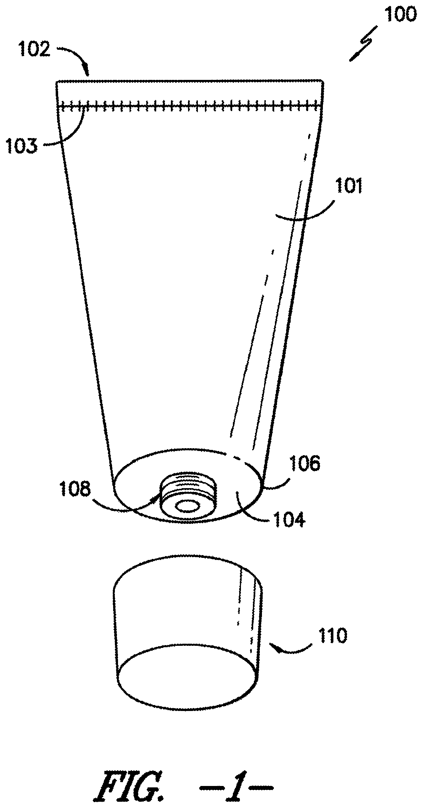

By way of example, Fig. 1 shows container 100, which is depicted as a squeezable tube container. Container 100 has a body 101, a bottom end 102, which is sealed at crimp seal 103, and a shoulder end 104, which forms shoulder 106 where body 101 joins shoulder end 104. In addition, shoulder end 104 may have an opening, such as a nipple, for releasing contents of the tube. Finally, cap 110, may be removably attached to container 100. In other embodiments, alternative types of caps, such as flip caps and screw caps, may be employed. In still other embodiments, containers may have a pump dispenser or a foaming dispenser.

In some embodiments, the present invention includes methods of applying labels to containers and other objects. By way of example, a squeezable tube container may be manufactured by forming a cylinder from laminates of plastics and/or foils and creating a longitudinal seam to create a sealed cylinder, called laminate tubes. Alternatively, in another exemplary embodiment, tubes may be manufactured by extruding a thin-walled continuous plastic tube or pipe that is subsequently sheared into standard lengths. Under either of the foregoing exemplary methods, the resulting tube has a cylindrical shape and two open ends. One end may be closed or sealed in any suitable manner, such as heating and crimping shut with standard tube sealing processes, to form a bottom end, and a shoulder end may be welded or otherwise joined to the opposing end. Prior to closing the bottom end or joining the shoulder end to the tube, the container may be filled with a product, such as a gel, lotion, or cream, through an open end of the tube. In still other embodiments, a container or object may be cylindrical having two ends without a crimped end, such as a bottle, can, or jar.

Pursuant to some embodiments of the present invention, a shrink label may be applied to a container during or after the manufacture of the container. As used herein, shrink labels and shrink films are films that shrink in at least one direction when heated to a shrink temperature. A shrink label may be configured in a state in which it is larger in size than an article to which it is to be applied, and the label is shrunk using heat or other means to provide a generally tight fit to the article, such as a container. In other embodiments, a shrink film may be adhered to an article using an adhesive without shrinking the label to tightly fit the article. In still other embodiments, only a portion of a shrink film may be heated to form a tight fit to an article and another portion may be fit to an article using adhesive. In some embodiments, shrink films of the present invention may shrink only in the machine direction upon exposure to a shrink temperature. In other embodiments, shrink films of the present invention may shrink only in the machine direction upon exposure to a shrink temperature and may grow (or expand) in the cross direction.

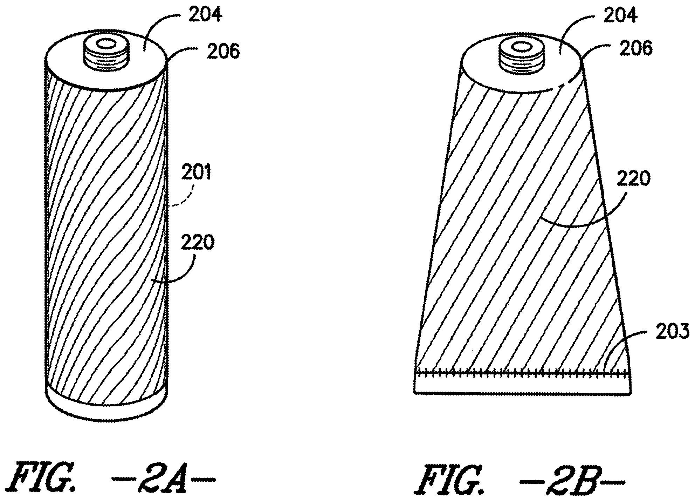

As indicated above, in some embodiments, the present invention includes methods for applying labels to objects, including containers and intermediate products made in the process of manufacturing a container. For example, as shown in Fig. 2A with respect to a squeezable tube container, a label may be applied during the manufacture of the container. As illustrated in Fig. 2A, label 220 may be applied around the circumference of the tube after the shoulder end 204 has been joined to the tube body 201. In such embodiments, labels may be applied around the circumference of a tube in any suitable manner, such as by wrapping the label around the tube or by forming the label into a sleeve and placing the sleeve around the body of the tube. The label may be applied to the body of the tube using an adhesive and without exposing the label to heat at or above a shrinkage initiation temperature. In other embodiments, the label may be subjected to sufficient heat to shrink and form a tight wrap around the tube body. If a label includes a release liner, the release liner may be removed using conventional peel tip dispensing equipment. For a machine-direction-oriented shrink film, the machine-direction may be applied in the direction around the circumference of the tube body. In some embodiments, the length of the label may be chosen to provide a small overlap seam, such as of approximately 1/8th inch overlap.

As shown in Fig. 2A, label 220 is located solely around the tube body 201 and does not extend above shoulder 206 or into an area that will ultimately be sealed to form bottom end 202. The label may be applied flush to the tube body 201 using any suitable adhesive. Although, in other alternative embodiments, the label may applied around the tube body 201 as a sleeve and then heated to a shrink initiation temperature for a sufficient time for the label to shrink and form a suitably tight fit around the container. Bottom end 204 may also be sealed by forming crimp seal 203. The resulting product is shown in Fig. 2B

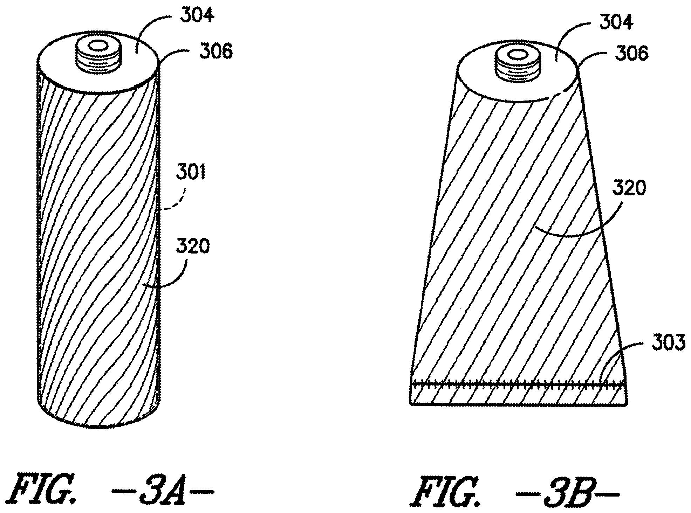

In some embodiments of the present invention, labels may be applied to cover all, substantially all, or a portion of an object or container body. For example, in some embodiments, labels of the present invention may be applied to cover a squeezable tube from near its crimp end to the shoulder. These labels, such as illustrated in Figs. 3A and 3B, may be prepared by applying a label around the circumference of the tube as described above, wherein the label extends into the area of the tube to be crimped and is applied before the tube is crimped closed. Thus, upon crimping of the tube to form the bottom end 302, the label extends into the crimped area 303 and takes and also extends into the area below the crimp. The label may remain bonded to the tube during and after crimp sealing and takes on the embossed shape of the crimp seal itself. In some embodiments, a date, product code, or other product information may be engraved or otherwise included in the crimp seal. In some embodiments, the container may be filled with product through the bottom end before crimping or sealing.

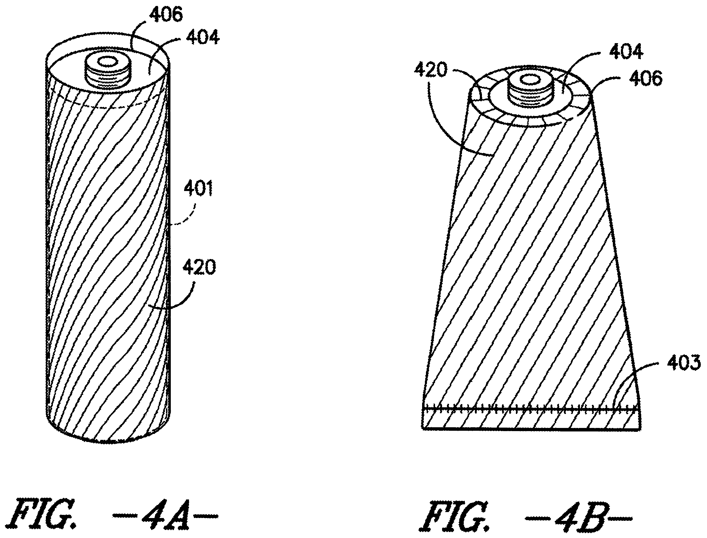

In other embodiments, labels of the present invention may also cover an entire container body, such as, for example, of a squeezable tube from its crimp end to over its shoulder. In particular, as shown in Figs. 4A and 4B, label 420 extends into and beyond the crimp area 403 of the tube (as explained above with respect to Fig. 3) and also extends above the shoulder 406 of the tube. In this regard, the label may be affixed to the tube after the shoulder end 404 has been joined to the tube. The label applied around the circumference of the tube may extend above the shoulder 406. In some embodiments, the label may be affixed flush to the tube body using any suitable adhesives. In alternative embodiments, the label may be applied loosely or as a sleeve around the tube body and, upon sufficiently heating the label, the label may shrink to form a fit around the shoulder end 404. Whether applied to the tube body using adhesive or shrinkage or both, a heat stream may be applied specifically and/or exclusively to the shoulder region of the tube to assist in shrinking the label portion that extends above the shoulder, such that this label portion draws down to contact the shoulder end as shown in Fig. 4B. As indicated above, a conformable shrink film may be used such that the label takes the shape of the container and also shrinks to affix at the shoulder end 404. Such heat may be applied in any suitable manner. In some embodiments, by way of example, a heat gun at 550° C, may be used to supply heat to the shoulder end from a distance of about 20 to about 250 mm. In addition, the heat may optionally be applied at an angle to the tube, such as of about 45°, in some embodiments, and in other embodiments heat may be applied directly towards the tube. In the embodiments of Figs. 3 and 4, a cap may optionally be placed on the tube after the label is shrunk to a suitably tight fit.

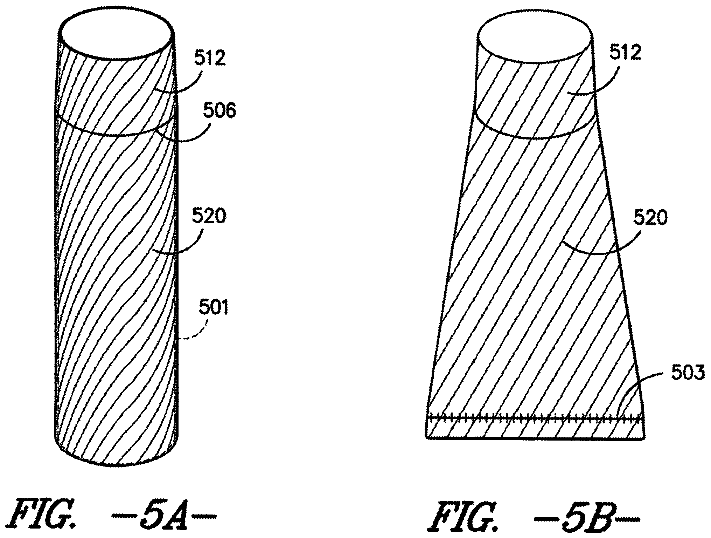

In still other embodiments, as shown in Figs. 5A and 5B, labels of the present invention may cover an entire object and a cap thereon, such as a container body of a squeezable tube and also some or all of a cap 512 of the tube. For example, as shown in Fig. 5A, the label 520 extends into and beyond the crimp of the tube and also extends above the shoulder 506 of the tube and covers the entire sides of the cap 512. In other embodiments, the label may only cover a portion of the sides of the cap. In still other embodiments, a portion of the label may cover the entire side of a cap, as shown in Fig. 5B, and may also wrap over and cover a portion or the entirety of a top of the cap. These labels may be applied in the same manner as described above for the embodiment of Fig. 4, except that a cap is placed on the tube before the label is affixed. After the cap is on the tube, the label may be applied such that it extends from the container body up to a portion or all of the sides of a cap. Alternatively, the label may extend above the cap and, upon applying sufficient heat, the excess label portion extending above the cap may shrink to rest on the top of the cap. As indicated above, in some embodiments, a conformable shrink film may be used.

In embodiments in which a label continuously covers at least a portion of the container and at least a portion of the cap, such as shown in Fig. 5, the label may provide tamper detection feature to the container. In particular, opening of the product container in such embodiments would require breaking the label. A broken label may alert a potential purchaser or user that the container has been previously opened.

In some embodiments, an adhesive may be applied to a label or tube to aid in securely affixing a label to the tube upon shrinkage of the label. In some embodiments, adhesive may optionally be applied only in such regions of the label that extend above the shoulder of the tube (which will be drawn down to affix to the shoulder end of the tube upon shrinkage) or to the shoulder end of the container that will be covered by the label. In other embodiments, a label may include an adhesive, as discussed below.

Upon application of a label to a container or other object, the label may be wiped or pressed down, either before, during, or after heating to obtain a desired shrinkage. Any suitable manner of wiping may be used, such as a contacting the label with a piece of strapping, banding tape, or other material. In some embodiments, any label portion applied to a shoulder end of a container may be wiped. In other embodiments, an entire label may be wiped down. In still other embodiments, portions of a label may be wiped down.

In some alternative embodiments of the present invention, labels may be applied in any of the foregoing manners prior to a shoulder end being affixed to the tube. In such embodiments, the heat applied to join the shoulder end may also serve to shrink the label to a suitably tight fit around the container. In addition, in alternative embodiments of the present invention, labels may be added to containers that have already been sealed, such as squeezable tubes having a closed bottom end and a shoulder end joined.

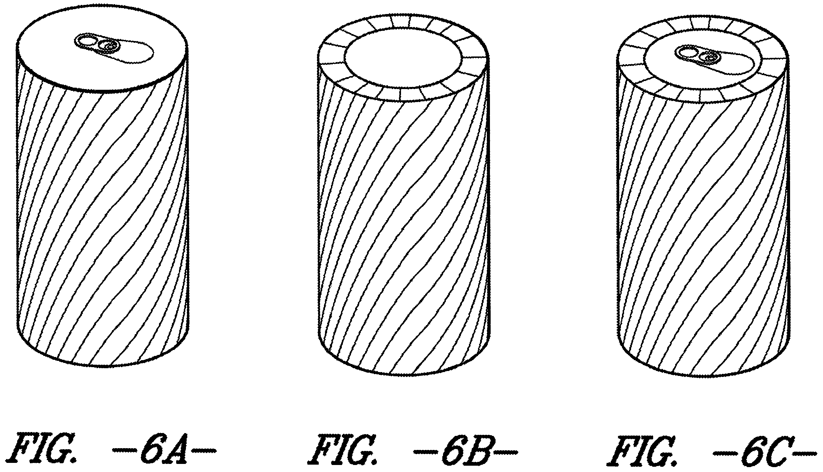

Although illustrated above in the context of containers and, more specifically, squeezable tube containers, one of ordinary skill in the art will readily appreciate that methods of the present invention may be utilized to apply films and labels to any suitable object. For example, the present invention may be used to apply labels to bottles, jars, cans, and other objects in the same manners and variations described above in the exemplary context of tubes. In some embodiments, the article or container may be made of any conventional polymer, glass, or metal. Examples of suitable polymeric materials include high density polyethylene (HDPE), low density polyethylene (LDPE), polyethylene terephthalate (PET), polypropylene (PP), polyvinyl chloride, polycarbonate, nylon, fluorinated ethylene propylene, polystyrene, etc. The article or container can be made by a number of various processes known in the art, such as blow molding, injection molding, thermoforming, rotational molding and the like. In some particular embodiments, labels of the present invention may be applied using methods of the present invention to batteries. The examples of Figs. 6A-9B provide other exemplary applications of films of the present invention. One of ordinary skill in the art will readily appreciate that the techniques described above may be used in connection with these additional examples.

By way of example, films of the present invention may be applied to cans, such as metal drinking cans as shown in Fig. 6A. As shown in Fig. 6B, such labels may extend around a bottom edge of the can. The amount of film depicted on the bottom of the can in Fig. 6B is exemplary, and in other embodiments the film may extend a greater or lesser amount onto the bottom of an object, such as the can in Fig. 6B. In still other embodiments, a film applied to a can or other object may stop at or near a bottom edge of the can or object and not extend over the edge, or shoulder, of the can or object. Also, as shown in Fig. 6C, a film of the present invention may also extend over a top edge, or shoulder, of a can, whereas in other embodiments the film may stop at a top edge of the can, as shown in Fig. 6A. In some embodiments, a film of the present invention may extend over both a top and bottom edge, or shoulder, of a can.

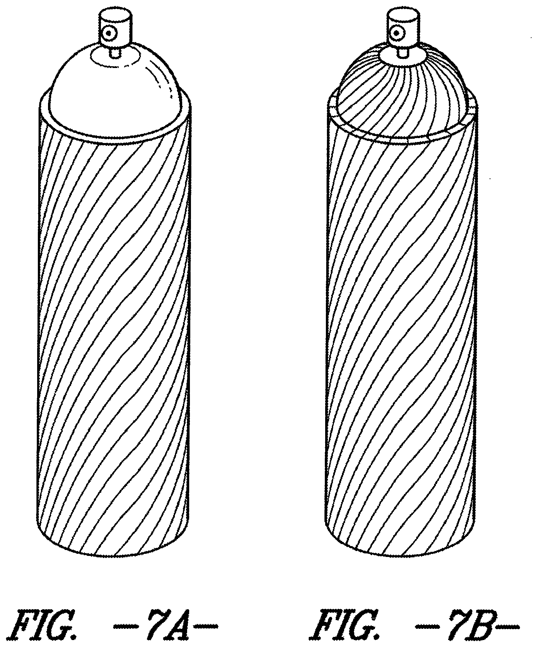

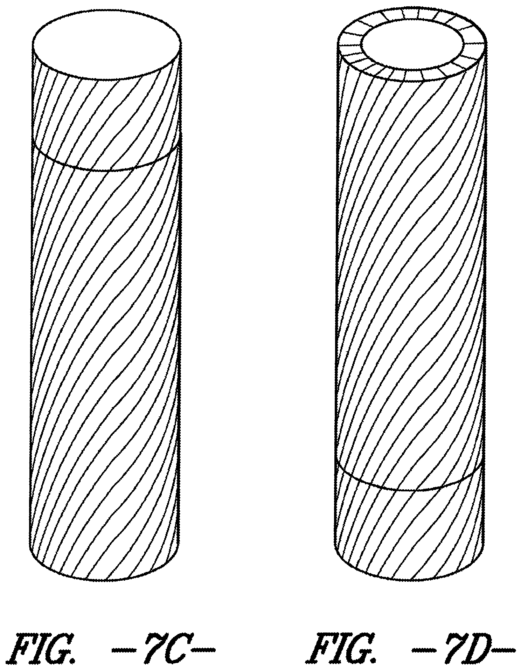

Similarly, films of the present invention may be applied over spray cans, such as shown in Figs. 7A-7D. As shown in Fig. 7B, a film may optionally extend over a shoulder of the spray can and be applied on the curved upper portion of the spray can. In some embodiments, as shown in Figs. 7C, a film of the present invention may be applied over a spray can and a cap on the spray can. As shown in Fig. 7C, the film does not extend over the top shoulder of the cap of the spray can. However, in some embodiments, not depicted, the film may be applied over a top portion of the cap of the spray can. In addition, as shown in Fig. 7D, films of the present invention may also or alternatively extend over a bottom end of the spray can.

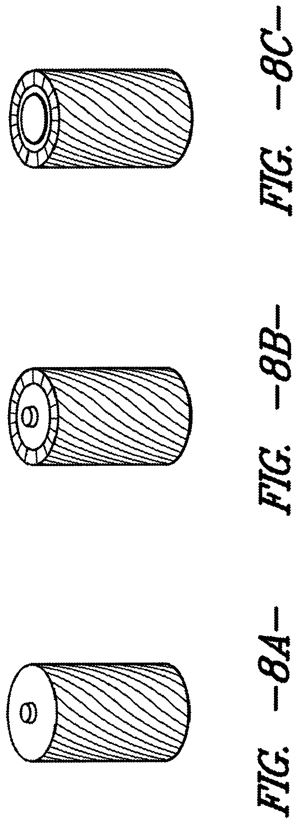

In yet another exemplary embodiment, films of the present invention may be applied to batteries as shown in Figs. 8A-8C. As shown in Fig. 8A, a film may be applied around the sides of a battery. In addition, films of the present invention may also be applied over a top edge, or shoulder, of the battery as shown in Fig. 8B and/or over a lower edge, or shoulder, of the battery as shown in Fig. 8C.

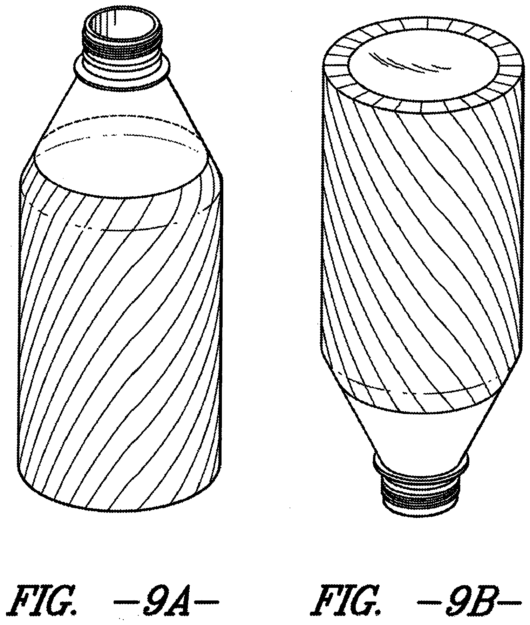

In still another embodiment, as illustrated in Figs. 9A and 9B, films of the present invention may be applied to bottles, such as drinking bottles. As shown in Figs. 9A and 9B, a film may be applied to the sides of a drinking bottle and, optionally, on a portion of the neck area of the bottle and also optionally extending over the bottom edge, or shoulder, of the bottle. For purposes of this example, the area where the side of the bottle meets the neck of the bottle may be considered a shoulder.

Labels of the present invention may be applied to containers having any suitable degree of compound curvature. In some embodiments, labels of the present invention may be applied to objects and containers having a low level of compound curvature. As used herein, the term "compound curve" means a surface having no direction for which there is no curvature. For example, the surface of a sphere or the surface of an ellipsoid has curvature in every direction, and therefore has compound curves. A cylinder, on the other hand, has a surface for which there is at least one direction for which there is no curvature. Thus, a simple cylinder does not have compound curves.

As indicated above, in some embodiments, labels of the present invention may include shrink labels and present invention includes embodiments of shrink labels. Shrink labels of the present invention may be formed from one or more polymers. By way of example, shrink labels may be formed from a polymer chosen from polyester, polyolefin, polyvinyl chloride, polystyrene, polylactic acid, and copolymers and blends thereof. In some embodiments, such polymers may include polyvinyl chloride (PVC), polyproplyene terephthalate glycol (PETG), oriented polypropylene (OPP), polylactide (also referenced as plylactic acid) (PLA), expanded polystyrene (EPS), polystyrene, and blends thereof.

Various embodiments of shrink labels are within the scope of the present invention. In some embodiments, as indicated above, shrink labels of the present invention may include only a single film layer. Alternatively, in some embodiments, shrink labels of the present invention may include multilayer films. In some embodiments, such multilayer films may include films with coextruded or laminated layers. By way of example, in one illustrative embodiment, a film may have layers configured as A/B/C/B/A, wherein A represents a skin layer, B represents a tie layer, and C represents the core layer. In other embodiments using the same designation, films of the present invention may have a configuration of A/C/A. In other embodiments using the same designation, films of the present invention may have a configuration of A/C/A. In still other embodiments, multilayer films may have configurations such as, for example, A/C/B, A/B/C/B/D, A/D/B/C/B/D/A, A/C/B/D/B/C/A, wherein A is a skin layer, B is a tie layer, D is a functional skin layer, and C is a core layer. Thus, as indicated, films of the present invention may have a symmetrical or an asymmetrical configuration. In addition, other layers may be present in some films of the present invention, such as one or more barrier layers, adhesive layers, and/or print layers. Some labels of the present invention may have font or decorative features, such as for brand or product information. In addition, in some embodiments, at least one outer layer includes a pressure sensitive adhesive.

Conformable labels, including conformable shrink labels, may also be used within the scope of the present invention. A conformable film may take the shape of the container to which it is applied, without requiring heat for a non-shrink conformable label whereas a shrink conformable label may require heat. A conformable label may have a low modulus in at least one direction for flexibility. As indicated above, in some embodiments, the present invention may include a conformable shrink film.

In some embodiments, each type of layer in a film may have substantially the same composition, such as all skin layers in a film having the same composition. In alternative embodiments, some or all of the skin layers in a film may have differing compositions. In similar fashion, tie layers in a film of the present invention may have substantially the same composition or some or all tie layers may have distinct compositions.

In some embodiments, a core layer may be comprised of polymeric material, such as a polyolefin resin or blends thereof. For example, the core layer in some embodiments of the present invention may be comprised of low density polyethylene, linear low density polyethylene, medium density polyethylene, ethyl vinyl acetate, polypropylene, and blends thereof. In some embodiments, the core layer may additionally or alternatively be comprised of elastomers and/or plastomers, such as those available from The Dow Chemical Company under the product names Engage and Versify, respectively. By way of example, Versify 2300, Versify 3300, Engage 8842, and Engage 8200 may be used in some embodiments. In some embodiments, the core layer may comprise a blend of linear low density polyethylene with one or more plastomers and/or elastomers. In some embodiments, the core layer may also be prepared with other non-olefinic material, such as styrene ethylene butylene styrene (SEBS) poly(styrene-butadiene-styrene) (SBS), poly(styrene-isoprene-styrene) (SIS), and other similar comopnents. In some embodiments, the core layer may have a density between about 0.858 to about 0.94 g/cc. In other embodiments, the core layer may have a density between about 0.86 to about 0.92. In addition, in some embodiments, the thickness of the core layer can range from about 5% to about 95% of the total relative thickness of a particular film. In still other embodiments, the core may be from about 7.5% to about 93% of the total relative thickness of a film. In yet other embodiments, the core may be from about 10% to about 90% of the total relative thickness of a particular film.

In addition, films of the present invention may include one or more skin layers. In some embodiments, at least one skin layer may include a shrinkable polymer. Skin layers may include any shrinkable polymer that is suitable for a given embodiment. By way of example, shrinkable polymers that may be present in a skin layer of the present invention may include, without limitation, cyclic polyolefin (COC), polyolefin, polyolefin copolymers (such as and including ethylene vinyl acetate), polyester, modified polyester (PETG), polylactic acid, styrene block copolymers, polystyrene, and blends of any of the foregoing. In some embodiments, each skin layer may be about 3% to about 40% of the total relative thickness of a film. In other embodiments, each skin layer of a film may have a thickness that is about 4 to about 35% of the total relative thickness of the film. In still other embodiments, a skin layer may constitute about 5% to about 30% of the total relative thickness of a film. Furthermore, as indicated above, some films of the present invention may have multiple skin layers, in which case each skin layer may have a thickness in the aforementioned ranges and also the total thickness of all skin layers may be within the aforementioned ranges.

In some embodiments, films of the present invention may include skins comprised of a blend of cyclic polyolefin and low density polyethylene. In other embodiments, skins of the present invention may be comprised of cyclic polyolefin and linear low density polyethylene. For example, in one particular embodiment, the cyclic polyolefin may have a density of about 1.02 g/cc and the low density polyethylene may have a density in the range of about 0.868 to about 0.93 g/cc, with each range including each intermittent value therein. The percentage by weight of cyclic polyolefin to low density polyethylene may vary in differing embodiments of the invention. In some embodiments, for example, cyclic polyolefin may constitute by weight about 40% to about 95% of a core. In other embodiments, cyclic polyolefin may constitute by weight about 45% to about 93%, or alternatively from about 50% to about 90%, of a core. In addition, a core may also include about 5% to about 60% low density polyethylene. In some embodiments, the weight ratio of cyclic polyolefin to low density polyethylene may be in the range of about 40:60 to about 95:5, specifically including each intermittent value therein. In some embodiments, the percentage by weight may be about 50:50, 70:30, 74:26, or 90:10. In still other embodiments, skin layers of the present invention may also comprise one or more polyolefin elastomers.

In some embodiments, skin layers of a film may also include other components, For example, skin layers in some embodiments may be prepared using up to about 15% by weight PETG. In some embodiments, a skin layer may be prepared using up to about 20% by weight general purpose polystyrene (GPPS) impact modified with impact modifiers such as SEBS, SBS, SIS, or other suitable modifiers.

In some embodiments, films of the present invention may include one or more tie layers. When present, a tie layer may be located between two layers of the film and may function to improve adherence between the two layers of the film. In some embodiments, a tie layer may be present between a core layer and a skin layer. Any suitable material, based upon the desired properties and the core layer and skin layer materials, may be used for the tie layer.

By way of example and without limitation, tie layers may include maleic anhydride; maleic anhydride grafted ethylene acrylate; modified polymers, such as styrene maleic anhydride; polyolefin modified with maleic anhydride; and block copolymers, such as styrene ethylene butylene styrene (SEBS) copolymer. In other embodiments, depending on the compositions of the two layers of the film which the tie layer is located between, the tie layer can include at least one thermoplastic polymer selected from the group consisting of a polyolefin to include for example ethylene and propylene homopolymers and copolymers, an unsaturated carboxylic acid or anhydride grafted polyolefin to include for example maleic anhydride grafted polypropylenes and maleic anhydride grafted polyethylenes, an alkene-unsaturated carboxylic acid or unsaturated carboxylate ester copolymer to include for example ethylene-alkyl methacrylate copolymers and ethylene-vinyl acetate copolymers, a metal salt of an alkene-unsaturated carboxylic acid copolymer to include for example ionomers which are sodium or zinc salts of ethylene-methacrylic acid copolymers, a styrene homopolymer or copolymer, a cyclic olefin homopolymer or copolymer, a halogen-containing polymer, a polyurethane, a polycarbonate, a polyacrylonitrile, a polyamide, an aromatic polyether, an aromatic polyimide, an aromatic polyamide-imide, a (meth)acrylate polymer, a polyester to include for example poly(ethylene terephthalate)s, a hydrocarbon resin to include for example hydrogenated polyterpene resins, and a mixture of two or more of any of the foregoing polymers.

In some embodiments, films of the present invention may also include an adhesive layer. Suitable adhesive, such as pressure sensitive adhesives, are known in the art, and any suitable adhesive may be used for a particular embodiment. By way of example, and without limitation, suitable pressure sensitive adhesives may include any solvent-based or emulsion-based pressure sensitive adhesive, such as acrylic or rubber based pressure sensitive adhesives. In some embodiments the pressure sensitive adhesive may be a water-based adhesive. In some embodiments, adhesives used in accordance with the present invention may include, without limitation, solutions, hot melts, and ultraviolet hot melts. One of ordinary skill in the art will appreciate that, in some embodiments, adhesives of the present invention may be cross-linkable, such as by using, by way of example, metal complexes, aziridines, isocyanites, ultraviolet curing, or electron beam curing. In some embodiments, adhesives of the present invention may also include color dyes, fillers, and/ or stabilizers, all of which are known in the art.

An adhesive may be applied to the inner surface of the shrink film by any known method. For example, the adhesive may be applied by die coating curtain coating, spraying, dipping, rolling, gravure or flexographic techniques. The adhesive may be applied to the shrink film in a continuous layer, a discontinuous layer or in a pattern. The pattern coated adhesive layer substantially covers the entire inner surface of the film. As used herein with respect to an adhesive, "substantially covers" is intended to mean the pattern in continuous over the film surface, and is not intended to include adhesive applied only in a strip along the leading or trailing edges of the film or as a "spot weld" on the film. The adhesive may be placed onto the film at a coat weight of about 10 to about 40, or from about 20 to about 25 grams/m². In some embodiments, adhesive may only cover a shoulder portion of the label that extends beyond the sides of a container body to cover a shoulder end after being heated and drawing down onto the shoulder end. In some embodiments, additional adhesive may be present at the shoulder portion of a label.

In some embodiments, films of the present invention having a pressure sensitive adhesive may also comprise a release liner, such as silicone treated paper, that adhered to the pressure sensitive adhesive prior to application of the film to a container or other object. In some embodiments, the release liner may cover all or substantially all of the pressure sensitive adhesive. Release liners may be removed using conventional processes when applying a film to a container.

Films of the present invention may also include an overlaminate film in some embodiments. By way of example, an overlaminate film may be included in some embodiments to protect films of the present invention when used as surface printed labels. In addition, an overlaminate may be used to provide additional durability and scuff resistance, such as during film printing, application, or use. In some embodiments, typical overlaminate films may not be suitable for over-the-shoulder applications as they do not have sufficient MD-shrinkage to suitably shrink down on the shoulder of the tube under heat. Accordingly, in some embodiments of films of the present invention applied over the shoulder an object, an overlaminate may be required that has at least a 16% machine-direction shrink at 120°C. In some embodiments, an overlaminate having a machine-direction shrink greater than about 18% at 120°C may be used. In still other embodiments, an overlaminate having a machine-direction shrink greater than about 20% at 120°C may be used. In some embodiments, an overlaminate having a machine-direction shrink less than about 80% at 120°C, or alternatively less than about 75% at 120°C, C may be used. In yet other embodiments, an overlaminate having a machine-direction shrink less about 70% at 120°C may be used. In some embodiments, an overlaminate having a machine direction shrink at 120°C in the range of from about 16% to about 80% may be used, including each intermittent value and subrange therein, such as, for example, about 18% to about 75% and about 20% to about 70%. The foregoing shrink values were measured in an oven at the stated temperature for five minutes.

Films of the present invention may also be of any suitable thickness. For example, in some embodiments, labels may have a total thickness in the range of about 0.5 mils to about 20 mils, including each intermittent value and sub-range therein. In other embodiments, films of the present invention may have a total thickness in the range of about 0.5 mils to about 12 mils. In still other embodiments, films of the present invention may have a total thickness in the range of about 0.5 mils to about 8 mils. In yet other embodiments, films of the present invention may have a total thickness in the range of about 1 mil to about 3 mils.

For shrink film embodiments of the present invention, any suitable film shrinkage percentage is within the scope of the present invention. In some embodiments, for example, the range of shrinkage may be from about 5% to about 80% in the machine direction, including each intermittent value and sub-range therein, at a temperature range of about 70° C to about 130° C. In some embodiments, the shrinkage in this temperature range may be from about 10% to 75%. In still other embodiments, the shrinkage in this temperature range may be about from about 15% to about 72%. In some particular embodiments, films of the present invention may have less than about 10% shrinkage in the machine direction at temperatures less than about 80°C and greater than about 15% shrinkage in the machine direction at temperatures greater than about 115°C, wherein such shrinkage values are measured in an oven at such temperatures after five minutes.

The modulus of films of the present invention may be about 30 ksi to about 600 ksi in the machine direction. In some other embodiments, such modulus may be about 50 ksi to about 500 ksi. In other embodiments, the machine-direction modulus may be about 60 ksi to 400 ksi. In other embodiments, such cross-direction modulus may be about 70 ksi to about 300 ksi.

Methods of manufacturing films are known in the art, and films of the present invention may be prepared using any suitable process. For example, in some embodiments, films of the present invention may be prepared using cast film processes, blown film processes, and extrusion and coextrusion processes. In addition, films of the present invention may comprise a single layer or multiple layers.

Any suitable orientation process may be used to orient films of the present invention. By way of example, films of the present may be oriented, such as in the machine-direction, by stretching the film in the machine direction using a series of heated rollers to orient the film and to impart machine-direction shrink properties. The film may also be a conformable film to allow the label to conform to the shape of a tube and to resist darting or creasing when a tube is squeezed.

By way of example, embodiments of the present invention may include a facestock having two outer layers A and a core layer C arranged in the layer structure of A/C/A. The outer layers may each comprise from about 10% to about 20% of the total film thickness and the core layer may comprise from about 60% to about 80% of the total film thickness. In addition, each of layers A may comprise a blend of polypropylene homopolymer and poly(ethylene-co-vinyl acetate). The blend may comprise about 50% polypropylene homopolymer and about 50% poly(ethylene-co-vinyl acetate). In addition, the blend may also include about 0.5% process aid based upon the combined weight of the polypropylene homopolymer and poly(ethylene-co-vinyl acetate). The core layer C may comprise a blend of about 27% propylene-based polymers, about 20% ethylene-octene based copolymer, about 20% poly(ethylene-co-vinyl acetate), about 23% of a composition comprising about 70% by weight of TiO₂ and about 30% by weight of linear low density polyethylene as a carrier, and about 10% of a composition comprising about 70% by weight of CaCO₃ and about 30% by weight of linear low density polyethylene as a carrier.

By way of further example, and without limitation, in some embodiments a film of the present invention may include two outer skin layers A and a core layer C arranged in the layer structure of A/C/A. The skin layers may include, by weight, polyethylene from about 65% to about 95% polyethylene (such as, in some specific embodiments, linear low density polyethylene having a density of about 0.91 to about 0.94 g/cm³), about 0% to about 30% ethylene vinyl acetate, and about 1% to about 5% antiblock (such as, for example, CrystalClear™ 102077, available from Ampacet Corporation, in a carrier resin of linear low density polyethylene). The core layer may include, by weight, about 0% to about 30% polyethylene (such as, in some specific embodiments, linear low density polyethylene having a density of about 0.91 to about 0.945 g/cm³), about 30% to about 50% polypropylene, about 10% to about 20% ethylene vinyl acetate, about 10% CaCo₃ masterbatch (such as 102839 R990-690 CAC03 PE MB, available from Ampacet Corporation, in a linear low density polyethylene carrier resin), and about 20% TiO₂ masterbatch (such as 111712 White PE MB, available from Ampacet Corporation, in a linear low density polyethylene carrier resin). In alternative exemplary embodiments, some such exemplary films may also include tie layers such that the film structure is A/B/C/B/A, wherein the tie layer includes, by weight, about 60% linear low density polyethylene and about 40% ethylene vinyl acetate. In these exemplary embodiments, the combined skin and optional tie layer thickness may be about 10 to about 30% of the total film thickness (about 5% to about 15% per side), and the core layer thickness may be about 70% to about 90% of the entire film thickness. By way of further example, the skin layer of such embodiments may have a total thickness of about 20% of the entire film thickness (about 10% per side) and the core layer may have a thickness of about 80% of the entire film thickness.

The following examples provide exemplary embodiments to further illustrate embodiments of the present invention, wherein the layer percentages are provided as weight percentages and the film layer compositions are provided in formulation by weight. The following abbreviations are used in the examples below:

| **Abbreviation** | **Description** |
|---|---|
| HPP | Homo Polypropylene |
| RCP | Random Polypropylene |
| EVA | Ethylene vinyl acetate with 18% vinyl acetate content |
| LLDPE | Linear low density polyethylene 0.935 density |
| LLDPE 2 | Linear low density polyethylene 0.917 density |
| Tio2 MB | Titanium dioxide masterbatch Made by Ampacet, Commercial name; 111712 White PE MB, Carrier resin LLDPE 0.92 density |
| CaCo3 MB | Calcium carbonate masterbatch Made by Ampacet, Commercial name; 102839 R990-690 CAC03 PE MB, Carrier resin LLDPE 0.92 density |
| PE Elastomer | Polyethylene elastomer 0.87 density, made by Dow |
| COC | Cyclo olefinic copolymer Made by Topas |
| AB in PE | Antiblock Made by Ampacet, commercial name CrystalClear™ 102077, Carrier resin LLDPE 0.92 density) |

### EXEMPLARY EXAMPLES

| **Example #** | **2** | **3** | **4** | |
|---|---|---|---|---|
| **Structure Type** | ACA | ABCBA | ACA | |
| **Layer A Skin** | 0.01 [AB in PE] | 0.01 [AB in PE] | 0.5 [EVA] | |
| | 0.79 [LLDPE] | 0.59 [LLDPE] | 0.3 [HPP] | |
| | 0.20 [EVA] | 0.2 [LLDPE2] | 0.2 [LLDPE] | |
| | | 0.20 [EVA] | | |
| **Layer A (%)** | 5-15% | 5-10% | 5-15% | |
| **Layer B tie** | NA | 0.60 [LLDPE] | NA | |
| | | 0.40 [EVA] | | |
| **Layer B (%)** | NA | 5-10% | NA | |
| **Layer D** | NA | NA | NA | |
| **Layer D (%)** | NA | NA | NA | |
| **Layer C Core** | 0.30 [HPP] | 0.30 [HPP] | | |
| | 0.20[RCP] | 0.30[LLDPE] | 0.3 [EVA] | |
| | 0.22 [EVA] | 0.12 [EVA] | 0.3 [HPP] | |
| | 0.18 [TiO2 MB] | 0.18 [TiO2 MB] | 0.1 [LLDPE] | |
| | 0.10 [CaCO3 MB] | 0.10 [CaCO3 MB] | 0.2 [TiO2 MB] | |
| | | | 0.1 [CaCO3 MB] | |
| **Layer C (%)** | 70-90% | 60-80% | 70-90% | |

| **Example #** | **5** | **6** | **7** | **8** |
|---|---|---|---|---|
| **Structure Type** | ABCBA | ABCDBCA | ABCBA | ABCDBCA |
| **Layer A Skin** | 0.01 [AB in PE] | 0.03 [AB in PE] | 0.01 [AB in PE] | 0.01 [AB in PE] |
| | 0.60 [LLDPE] | 0.97 [LLDPE] | 0.90 [LLDPE] | 0.90 [LLDPE] |
| | 0.39 [EVA] | | 0.09 [EVA] | 0.09 [EVA] |
| **Layer A (%)** | 5-10% | 5-10% | 5-10% | 5-10% |
| **Layer B tie** | 0.60 [LLDPE] | 0.80 [LLDPE] | 0.70 [LLDPE] | 0.70 [LLDPE] |
| | 0.40 [EVA] | 0.20 [PE Elastomer] | 0.30 [EVA] | 0.30 [EVA] |
| **Layer B (%)** | 5-10% | 5-10% | 5-10% | 5-10% |
| **Layer D** | NA | 0.20 [EVA 18] | NA | |
| | | 0.26 [HPP] | | 0.30 [HPP] |
| | | 0.17 [RCP] | | 0.30 [LLDPE] |
| | | 0.18 [TiO2 MB] | | 0.10 [EVA] |
| | | 0.09 [CaCO3 MB] | | 0.2 [TiO2 MB] |
| | | 0.10 [PE Elastomer] | | 0.1 [CaCO3 MB] |
| **Layer D (%)** | NA | 5-10% | NA | 10-15% |
| **Layer C Core** | 0.37 [EVA 18] | 0.22 [EVA 18] | 0.30 [HPP] | 0.38 [HPP] |
| | 0.1 [HPP] | 0.30 [HPP] | 0.30 [LLDPE] | 0.28 [LLDPE] |
| | 0.25 [RCP] | 0.20 [RCP] | 0.10 [EVA] | 0.07 [EVA] |
| | 0.18 [TiO2 MB] | 0.18 [TiO2 MB] | 0.2 [TiO2 MB] | 0.18 [TiO2 MB] |
| | 0.1 [CaCO3 MB] | 0.10 [CaCO3 MB] | 0.1 [CaCO3 MB] | 0.09 [CaCO3 MB] |
| **Layer C (%)** | 60-80% | 50-70% | 60-80% | 40-60% |

| **Example #** | **9** | **10** | **11** | |
|---|---|---|---|---|
| **Structure Type** | ABCBA | ACA | ACA | |
| **Layer A Skin** | 0.05 [AB in PE] | 0.02 [AB in PE] | 0.5 [EVA] | |
| | 0.95 [LLDPE] | 0.98 [LLDPE] | 0.5 [HPP] | |
| **Layer A (%)** | 5-10% | 5-10% | 5-10% | |
| **Layer B tie** | 0.40 [LLDPE] | NA | NA | |
| | 0.60 [COC] | | | |
| **Layer B (%)** | 5-10% | NA | NA | |
| **Layer D** | NA | NA | NA | |
| **Layer D (%)** | NA | NA | NA | |
| **Layer C Core** | | 0.18 [HPP] | 0.18 [HPP] | |
| | | 0.30 [HDPE] | 0.12 [RCP] | |
| | 0.35 [HPP] | 0.12 [EVA] | 0.12 [EVA] | |
| | 0.35 [LLDPE] | 0.1 [LLDPE] | 0.4 [LLDPE] | |
| | 0.2 [TiO2 MB] | 0.2 [TiO2 MB] | 0.12 [TiO2 MB] | |
| | 0.1 [CaCO3 MB] | 0.1 [CaCO3 MB] | 0.06 [CaCO3 MB] | |
| **Layer C (%)** | 60-80% | 70-90% | 70-90% | |

In some embodiments, the foregoing films may be oriented in the machine direction or the cross direction. In some embodiments, the film may be machine direction stretched between 3X and 8X. For example, if an extruded film enters MDO at 100 feet/minute and is stretched 3X time, it will leave MDO at 300 feet/minute. In essence, a one feet film after 3X stretch will become 3 feet. In addition, in some embodiments, such films may be coated with an emulsion pressure sensitive adhesive or other suitable adhesive, and a paper liner or other liner may optionally be contacted and temporarily joined against the adhesive.

By way of further example, pressure sensitive labels may be prepared from the foregoing examples and may be printed and die cut using standard press inks and die cut tooling. Die cut labels then may be applied to an object using a peel tip label dispenser. The labels may optionally be applied to an object or container such that the label extends beyond a shoulder, or edge, of the container by about 3 to about 5 mm.

After being applied, any label portion extending above the container shoulder may be exposed to heat, such as hot air or any suitable heat source, to induce shrinkage of the film. The container may be rotated so that heat is applied evenly around the tube so that the shrinkage is smooth and flat on the container shoulder. In addition, a cap may be attached to the container. With reference to a tube as an example, and without limitation, a cap may be attached to a shoulder end of the tube, and the cap may cover the exposed area of the shoulder end that was unlabeled. In similar fashion, caps may be applied to other objects, such as spray cans.

The container may be filled with any suitable product, such as, for example, a lotion, gel, or other product. In embodiments in which a label is applied to a tube, the tube may then be crimp sealed using standard heat sources and clamping devices, thereby forming a crimped or embossed seal on the bottom of the tube. Using the methods described herein, the resulting container may optionally include a label, which may be printed or decorated, that provides complete and uniform coverage of the entire container body or selected portions thereof as described herein.

With regard to the specific exemplary embodiments described for illustration in Example 2 and Example 3, the combined skin and tie layers may have a thickness of about 10% to about 30% (about 5% to about 15% per side), including each intermittent value therein, as measured from the entire film thickness. In some embodiments of Example 2 and Example 3, the total skin thickness may be about 20% (about 10% per side). In addition, the core layer may have a thickness of about 70% to about 90%, including each intermittent value therein. In some embodiments of Example 2 and Example 3, for example, the core layer may have a thickness of about 80%.

One of ordinary skill in the art will appreciate that alternative labels may be prepared within the scope of the present invention based upon the disclosure herein, and the foregoing is provided by way of example and without limitation.

Unless provided elsewhere herein, the parameters noted were determined in the following respective manners:

| **Test** | **Description** | **Standard** |
|---|---|---|
| Oven shrink | To determine the amount of shrinkage of a plastic film by exposing the film to an elevated temperature in air | ASTM 1204* *modified testing condition as 5 minutes at 100°C (the ASTM standard is 15 minutes at 100°C) |
| Physical properties (modulus, tensile strength, and elongation) | To determine modulus and three tensile breaking properties: the force per unit width required to break a specimen (tensile strength), the percentage elongation at break (stretch), and the energy absorbed per unit area of the specimen before breaking (tensile energy absorption, TEA) | ASTM D882 |
| Density | Calculated based on weight average of each component density as reported by literature. | N/A |

These and other modifications and variations to the present invention may be practiced by those of ordinary skill in the art without departing from the spirit and scope of the present invention, which is more particularly set forth in the appended items. In addition, it should be understood that aspects of the various embodiments may be interchanged in whole or in part. Furthermore, those of ordinary skill in the art will appreciate that the foregoing description is by way of example only, and it is not intended to limit the invention as further described in such appended items. Each range discussed herein specifically and independently includes each intermittent value of such range unless denoted otherwise. Therefore, the spirit and scope of the appended items should not be limited to the exemplary description of the versions contained herein.

The present invention further relates to the following items:
1. A method of affixing a label to an object having sides and an end, wherein the sides join the end to form a shoulder, wherein the method comprises:
   applying a shrink label around the object, wherein the shrink label extends above the shoulder and extends to an end of the object opposite the shoulder,
   heating the shrink label at the shoulder at a sufficient temperature and for a sufficient time to shrink the label extending above the shoulder of the object to contact the shoulder end.
2. The method of item 1 wherein the label comprises a label oriented only in the machine direction.
3. The method of item 1 wherein the label comprises a label oriented only in the cross direction.
4. The method of item 1 wherein the label is biaxially oriented.
5. The method of any one of items 1-4 wherein heat is applied to the label at the shoulder at an angle of about 45 degrees.
6. The method of any one of items 1-5 wherein the label is a single layer.
7. The method of any one of items 1-5 wherein the label is a multilayer film.
8. The method of any one of items 1-7 wherein the label comprises a pressure sensitive adhesive.
9. The method of any one of items 1-8 wherein the label comprises one or more of cyclic polyolefin (COC), polyolefin, polyester, modified polyester (PETG), polylactic acid, styrene block copolymers, polystyrene, or blends thereof.
10. The method of any one of items 1-5 and 7-9 wherein the label comprises a core layer.
11. The method of any one of items 1-5 and 7-10 wherein the label comprises a tie layer.
12. The method of any one of items 1-11 wherein the method comprises wiping the label after heating the label.
13. The method of any one of items 1-12 wherein the method comprises wiping the label at the shoulder end after heating the label.
14. The method of any one of items 1-13 wherein the label has a shrink percentage in the range of about 5% to about 80% at a temperature in the range of about 70° C to about 130° C.
15. The method of any one of items 1-13 wherein the label has a shrink percentage in the range of about 10% to about 75% at a temperature in the range of about 70° C to about 130° C.
16. The method of any one of items 1-13 wherein the label has a shrink percentage in the range of about 15% to about 72% at a temperature in the range of about 70° C to about 130° C.
17. The method of any one of items 1-2 and 4-16 wherein the label has a modulus of about 30 ksi to about 600 ksi in the machine direction.
18. The method of any one of items 1-2 and 4-16 wherein the label has a modulus of about 50 ksi to about 500 ksi in the machine direction.
19. The method of any one of items 1-2 and 4-16 wherein the label has a modulus of about 60 ksi to about 400 ksi in the machine direction.
20. The method of any one of items 1 and 4-16 wherein the label has a modulus of about 70 ksi to about 300 ksi in the machine direction.
21. A method of affixing a label to an object with a cap, wherein the method comprises:
   applying a shrink label around the circumference of the object, wherein the shrink label extends to cover at least a portion of sides of the cap, and
   heating the shrink label at a sufficient temperature and for a sufficient time to shrink the label to a sufficiently tight fit around the object and at least a portion of the sides of the cap.
22. The method of item 21 wherein the method comprises applying the shrink label around the entire sides of the cap.
23. The method of item 21 wherein the method comprises applying the shrink label around the entire sides of the cap and extending above a top of the cap and wherein upon heating at a sufficient temperature and for a sufficient time the label extending above the top of the cap contacts the top of the cap.
24. The method of any one of items 21-23 wherein the label comprises a label oriented only in the machine direction.
25. The method of any one of items 21-23 wherein the label is biaxially oriented.
26. The method of any one of items 21-25 wherein heat is applied to the label at the shoulder at an angle of about 45 degrees.
27. The method of any one of items 21-26 wherein the label is a single layer.
28. The method of any one of items 21-26 wherein the label is a multilayer film.
29. The method of any one of items 21-28 wherein the label comprises a pressure sensitive adhesive.
30. The method of any one of items 21-29 wherein the label comprises one or more of cyclic polyolefin (COC), polyolefin, polyolefin copolymers, polyester, modified polyester (PETG), polylactic acid, styrene block copolymers, polystyrene, or blends thereof.
31. The method of any one of items 21-26 and 27-30 wherein the label comprises a core layer.
32. The method of any one of items 21-26 and 27-31 wherein the label comprises a tie layer.
33. The method of any one of items 21-32 wherein the method comprises wiping the label after heating the label.
34. The method of any one of items 21-33 wherein the method comprises wiping the label at the shoulder end after heating the label.
35. The method of any one of items 21-34 wherein the label has a shrink percentage in the range of about 5% to about 80% at a temperature in the range of about 70° C to about 130° C.
36. The method of any one of items 21-34 wherein the label has a shrink percentage in the range of about 10% to about 75% at a temperature in the range of about 70° C to about 130° C.
37. The method of any one of items 21-34 wherein the label has a shrink percentage in the range of about 15% to about 72% at a temperature in the range of about 70° C to about 130° C.
38. The method of any one of items 21-37 wherein the label has a modulus of about 30 ksi to about 600 ksi in the machine direction.
39. The method of any one of items 21-37 wherein the label has a modulus of about 50 ksi to about 500 ksi in the machine direction.
40. The method of any one of items 21-37 wherein the label has a modulus of about 60 ksi to about 400 ksi in the machine direction.
41. The method of any one of items 21-37 wherein the label has a modulus of about 70 ksi to about 300 ksi in the machine direction.
42. An object comprising:
   a body having sides, a bottom end, and a top end, wherein the body joins one or more of the top end and bottom end to form a shoulder,
   a label affixed with a flush fit around the body, and
   wherein the label extends above a shoulder of the container and is at least partially affixed on one or more of the top end and bottom end.
43. The object of item 42 wherein the shoulder forms angle in the range of about 90 degrees to about 120 degrees.
44. The object of any one of items 42-43 wherein the label comprises a label oriented only in the machine direction.
45. The object of any one of items 42-43 wherein the label is biaxially oriented.
46. The object of any one of items 42-45 wherein heat is applied to the label at the shoulder at an angle of about 45 degrees.
47. The object of any one of items 42-46 wherein the label is a single layer.
48. The object of any one of items 42-46 wherein the label is a multilayer film.
49. The object of any one of items 42-48 wherein the label comprises a pressure sensitive adhesive.
50. The object of any one of items 42-49 wherein the label comprises one or more of cyclic polyolefin (COC), polyolefin, polyester, modified polyester (PETG), polylactic acid, styrene block copolymers, polystyrene, or blends thereof.
51. The object of any one of items 42-46 and 48-50 wherein the label comprises a core layer.
52. The object of any one of items 42-46 and 48-50 wherein the label comprises a tie layer.
53. The object of any one of items 42-52 wherein the method comprises wiping the label after heating the label.
54. The object of any one of items 42-53 wherein the method comprises wiping the label at the shoulder end after heating the label.
55. The object of any one of items 42-54 wherein the label has a shrink percentage in the range of about 5% to about 80% at a temperature in the range of about 70° C to about 130° C.
56. The object of any one of items 42-54 wherein the label has a shrink percentage in the range of about 10% to about 75% at a temperature in the range of about 70° C to about 130° C.
57. The object of any one of items 42-54 wherein the label has a shrink percentage in the range of about 15% to about 72% at a temperature in the range of about 70° C to about 130° C.
58. The object of any one of items 42-57 wherein the label has a modulus of about 30 ksi to about 600 ksi in the machine direction.
59. The object of any one of items 42-57 wherein the label has a modulus of about 50 ksi to about 500 ksi in the machine direction.
60. The object of any one of items 42-57 wherein the label has a modulus of about 60 ksi to about 400 ksi in the machine direction.
61. The object of any one of items 42-57 wherein the label has a modulus of about 70 ksi to about 300 ksi in the machine direction.
62. A container comprising:
   a tubular body having a seal that forms a sealed bottom end and a shoulder assembly end, wherein the body joins the shoulder assembly by a shoulder,
   a cap adjoined to the tubular body a the shoulder end,
   a label affixed with a flush fit around the tubular body and sides of the cap,
   wherein the label extend above the cap and is at least partially affixed on the shoulder assembly end, and
   wherein the label extends from the tubular body beyond the seal at the sealed bottom end.
63. The container of item 62 wherein the shoulder forms angle in the range of about 90 degrees to about 120 degrees.
64. The container of any one of items 62-63 wherein the label comprises a label oriented only in the machine direction.
65. The container of any one of items 62-63 wherein the label is biaxially oriented.
66. The container of any one of items 62-65 wherein heat is applied to the label at the shoulder at an angle of about 45 degrees.
67. The container of any one of items 62-66 wherein the label is a single layer.
68. The container of any one of items 62-66 wherein the label is a multilayer film.
69. The container of any one of items 62-68 wherein the label comprises a pressure sensitive adhesive.
70. The container of any one of items 62-69 wherein the label comprises one or more of cyclic polyolefin (COC), polyolefin, polyester, modified polyester (PETG), polylactic acid, styrene block copolymers, polystyrene, or blends thereof.
71. The method of any one of items 62-66 and 68-70 wherein the label comprises a core layer.
72. The container of any one of items 62-66 and 68-70 wherein the label comprises a tie layer.
73. The container of any one of items 62-72 wherein the method comprises wiping the label after heating the label.
74. The container of any one of items 62-73 wherein the method comprises wiping the label at the shoulder end after heating the label.
75. The container of any one of items 62-74 wherein the label has a shrink percentage in the range of about 5% to about 80% at a temperature in the range of about 70° C to about 130° C.
76. The container of any one of items 62-74 wherein the label has a shrink percentage in the range of about 10% to about 75% at a temperature in the range of about 70° C to about 130° C.
77. The container of any one of items 62-74 wherein the label has a shrink percentage in the range of about 15% to about 72% at a temperature in the range of about 70° C to about 130° C.
78. The container of any one of items 62-77 wherein the label has a modulus of about 30 ksi to about 600 ksi in the machine direction.
79. The container of any one of items 62-77 wherein the label has a modulus of about 50 ksi to about 500 ksi in the machine direction.
80. The container of any one of items 62-77 wherein the label has a modulus of about 60 ksi to about 400 ksi in the machine direction.
81. The container of any one of items 62-77 wherein the label has a modulus of about 70 ksi to about 300 ksi in the machine direction.
82. A film comprising two outer layers and a core layer, wherein the core layer is arranged between the outer layers and the outer layers each comprise from about 10% to about 30% of the total film thickness and the core layer may comprise from about 70% to about 90% of the total film thickness, wherein:
   the outer layers comprise a blend of about 65% to about 99% by weight polyethylene and 0% to about 30% by weight ethylene vinyl acetate, and about 1% to about 5% antiblock; and
   the core layer comprises about 0% to about 30% by weight polyethylene, about 30% to about 50% by weight polypropylene, about 10% to about 20% by weight ethylene vinyl acetate, about 10% by weight calcium carbonate masterbatch comprising calcium carbonate in a linear low density polyethylene carrier resin, and about 20% titanium dioxide masterbatch comprising titanium dioxide in a linear low density polyethylene carrier resin.
83. The film of item 82 wherein the film further comprises two tie layers, wherein a tie layer is positioned between each outer layer and the core.
84. The film of item 82 wherein each tie layer is comprised of about 60% by weight linear low density polyethylene and about 40% by weight ethylene vinyl acetate.
85. The film of any one of items 82-84 wherein the polyethylene in the outer layers includes linear low density polyethylene.
86. The film of item 85 wherein the polyethylene in the outer layers includes linear low density polyethylene having a density of about 0.91 to about 0.94 g/cm³.
87. The film of any one of items 82-86 wherein the polyethylene in the core layer includes linear low density polyethylene.
88. The film of item 87 wherein the polyethylene in the core layer includes linear low density polyethylene having a density of about 0.93 to about 0.945 g/cm³.
89. The film of any one of items 82-88 wherein the outer layers and any tie layers have a total thickness of about 10% to about 30% of the entire film thickness.
90. The film of any one of items 82-89 wherein the core layer has a total thickness of about 70% to about 90% of the entire film thickness.
91. The film of item 90 wherein the outer layers have a total thickness of about 20% of the entire film thickness and the core layer has a thickness of about 80% of the entire film thickness.
92. The method of item 1 wherein the label comprises the film of any one of items 82-91.
93. The method of item 21 wherein the shrink label comprises the film of any one of items 82-91.
94. The container of item 42 wherein the shrink label comprises the film of any one of items 82-91.
95. The container of item 62 wherein the shrink label comprises the film of any one of items 82-91.
96. The method of any one of items 1-20 wherein the object selected from the group consisting of a bottle, can, jar, battery, and tube.
97. The method of any one of items 21-41 wherein the object selected from the group consisting of a bottle, can, jar, battery, and tube.
98. The object of any of items 42-61 wherein the object is a container.
99. The object of any of items 42-61 wherein the object is selected from the group consisting of a bottle, can, jar, battery, and tube.
100. The method of any one of items 1-20 wherein the object is a tubular body and the method further comprises forming a seal near the end of the tubular body opposite the shoulder after application of the label, wherein the shrink label extends through the seal.
101. The method of any one of items 21-41 wherein the object is a tubular body and the method further comprises forming a seal near the end of the tubular body opposite the shoulder after application of the label, wherein the label extends through the seal.
102. The object of any one of items 42-61 wherein the object is a container.

## Claims

1. A method of affixing a label to an object having sides and an end, wherein the sides join the end to form a shoulder, wherein the method comprises:
applying a shrink label around the object, wherein the shrink label extends above the shoulder and extends to an end of the object opposite the shoulder,
heating the shrink label at the shoulder at a sufficient temperature and for a sufficient time to shrink the label extending above the shoulder of the object to contact the shoulder end,
wherein said shrink label comprises a film comprising two outer layers and a core layer, wherein the core layer is arranged between the outer layers and the outer layers each comprise from about 10% to about 30% of the total film thickness and the core layer may comprise from about 70% to about 90% of the total film thickness, wherein:
the outer layers comprise a blend of about 65% to about 99% by weight polyethylene and 0% to about 30% by weight ethylene vinyl acetate, and about 1% to about 5% antiblock; and
the core layer comprises about 0% to about 30% by weight polyethylene, about 30% to about 50% by weight polypropylene, about 10% to about 20% by weight ethylene vinyl acetate, about 10% by weight calcium carbonate masterbatch comprising calcium carbonate in a linear low density polyethylene carrier resin, and about 20% titanium dioxide masterbatch comprising titanium dioxide in a linear low density polyethylene carrier resin.

2. The method of claim 1 wherein the label comprises a label oriented only in the machine direction.

3. The method of claim 1 wherein the label comprises a label oriented only in the cross direction.

4. The method of claim 1 wherein the label is biaxially oriented.

5. The method of any one of claims 1-4 wherein heat is applied to the label at the shoulder at an angle of about 45 degrees.

6. The method of any one of claims 1-5 wherein the label is a single layer.

7. The method of any one of claims 1 to 6 wherein the film further comprises two tie layers, wherein a tie layer is positioned between each outer layer and the core.

8. The method of claim 7 wherein each tie layer is comprised of about 60% by weight linear low density polyethylene and about 40% by weight ethylene vinyl acetate.

9. The method of any one of claims 1 to 8 wherein the polyethylene in the outer layers includes linear low density polyethylene, particularly linear low density polyethylene having a density of about 0.91 to about 0.94 g/cm³.

10. The method of any one of claims 1 to 9 wherein the polyethylene in the core layer includes linear low density polyethylene, particularly low density polyethylene having a density of about 0.93 to about 0.945 g/cm³.

11. The method of any one of claims 1 to 10, wherein the outer layers and any tie layers have a total thickness of about 10% to about 30% of the entire film thickness.

12. The method of any one of claims 1 to 11 wherein the core layer has a total thickness of about 70% to about 90% of the entire film thickness.

13. The method of claim 12 wherein the outer layers have a total thickness of about 20% of the entire film thickness and the core layer has a thickness of about 80% of the entire film thickness.

14. The method of any one of claims 1 to 13, wherein the label has a shrink percentage in the range of about 5% to about 80% at a temperature in the range of about 70° C to about 130° C, particularly wherein the label has a shrink percentage in the range of about 10% to about 75% at a temperature in the range of about 70° C to about 130° C, more particularly wherein the label has a shrink percentage in the range of about 15% to about 72% at a temperature in the range of about 70° C to about 130° C.
